# EUROPEAN PATENT APPLICATION

(11) **EP 1 113 689 A2**
(43) Date of publication of application: **04.07.2001**
(21) Application number: 00128562.6
(22) Date of filing: 27.12.2000
(51) Int. Cl.: H04Q 7/38

(54) **Mobile communications system and connection control method**

(30) Priority: 27.12.1999 JP 36860399
(71) Applicant: NEC CORPORATION, Tokyo (JP)
(72) Inventor: Furukawa, Hiroshi, Minato-ku, Tokyo (JP); Ushirokawa, Akihisa, Minato-ku, Tokyo (JP)
(74) Representative: Betten & Resch

(57) **Abstract**

A mobile communications system allowing high-speed setup and release of connection is disclosed. A primary group (103) of base stations (104.1-104.M) and a secondary group (105) included in the primary group are set and a base station included in the secondary group is connected to a mobile station (102) by a corresponding individual wireless link. Further, two common control channels PCCCH and SCCCH are provided to transfer control information and the PCCCH has a shorter control period. The setup control is performed only for a limited number of individual wireless links between the mobile station and the secondary group of base stations.

## Description

The present invention relates to a mobile communications system, and more particularly to a connection control technique for a cellular system.

In code division multiple access (CDMA) systems, soft handover is a well-known technique where a mobile station is simultaneously communicating with multiple base stations. allowing unbroken connection switching by making a connection to a new base station while maintaining a connection to an old base station. Soft handover provides site diversity, which is a method of using independent fading signals received on several transmission paths all carrying the same massage to improve the reliability of the transmission.

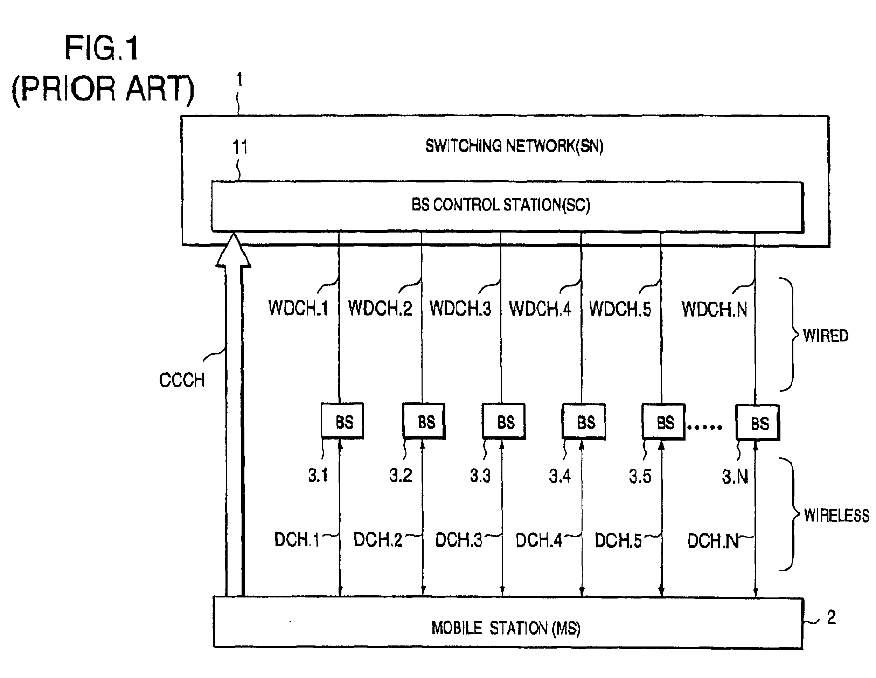

As shown in Fig. 1, a mobile station (MS) 2 that is in soft handover procossing is connected to N base stations (BSs) 3.1 to 3.N by N individual wireless links DCH.1 to DCH.N. respectively, so that necessary information oan be exchanged with each base station. The N base stations 3.1 to 3.N are connected to a BS control station (SC) 11 provided within a switching network 1 through wired links WDCH.1 to WDCH.N. respectively.

In the case where the mobile station 2 sets up a connection to a new base station or releases a connection to a base station, control signals are exchanged between the mobile station 2 and the BS control station 11 through a common control channel CCCH. The common control channel CCCH is formed by a wireless link from the mobile station 2 to respective ones of the N base stations 3.1 to 3.N and a wired link from the respective N base stations 3.1 to 3.N to the BS control station 11.

In general. a substantially long time is required for handover processing performed by setting up a new connection and releasing an old connection. The first reason is that it takes long until a connection to the wired link system has been established and the second reason is that the common control channel CCCH has a relatively long period of control.

In order to ensure the good quality of communication. the mobile station is preferably connected to a base station providing the minimum propagation loss. Therefore. taking the above-mentioned time required for handover processing into account, it is necessary for the mobile station to be connected in advance to a considerable large number of base stations so as to prepare for variations in propagation loss between the mobile station and the base stations. Such a group of base stations connected to the mobile station frequently include some base stations which do not make a much contribution to site diversity.

The excessive number of base stations simultaneously connected to the mobile station cause the amount of data flowing the wired links WDCH.1 to WDCH.N to be increased, resulting in line congestions on the wired links.

In addition, each base station needs a large number of transceivers and, on the other hand, a mobile station needs individual demodulators for demodulating signals received from the base stations, resulting in increased amounts of hardware in both sides.

In the case of downlink soft handover, multiple base stations simultaneously transmit radio signals to the mobile station. resulting in substantial interferences at adjacent cells. As a technique of suppressing an increase in interference in the case of downlink soft handover, a downlink transmission power control method has been proposed by Furukawa (Technical Report of Institute of Electronics, Information and Communication Engineers, RCS97-218, February 1998, pp.40. Second chapter).

However, the Furukawa's method suppresses or stops the transmission outputs on individual wireless downlinks from some of the base stations connected to the mobile station. Therefore, the individual wireless downlinks from the base stations connected to the mobile station are active, resulting in increased amount of data flowing the wired link system and further increased amounts of hardware in both sides of mobile station and base station.

As another technique of suppressing an increase in interference in the case of downlink soft handover, a downlink handover control method in a cellular system has been disclosed in Japanese Patent Application Unexamined Publication No. 11-308657. According to this conventional control method, in the case where information to be transmitted to the mobile station exists in the BS control station, one or more base stations are selected as primary base station in real time among the connection candidate base stations and only one or more primary base station transmits the information to the mobile station by wireless downlinks. Either the mobile station or each connection candidate base station determines whether the transmission is to be made based on the level of a received signal such as a pilot signal.

In this method, however, the individual wireless downlinks from the base stations to the mobile station connected to the mobile station are active, resulting in increased amount of data flowing the wired link system and further increased amounts of hardware in both sides of mobile station and base station.

An object of the present invention is to provide a mobile communications system and connection control method allowing high-speed setup and release of connection.

According to an aspect of the present invention, a mobile communications system allowing diversity handover control of a mobile station among a plurality of base stations which are controlled by a base-station control station, includes: a first set of base stations which are allowed to set up respective ones of individual wireless channels to the mobile station; and a second set of base stations including a subset of the first set, wherein a base station included in the first set is connected to the base-station control station by a corresponding wired link to exchange information associated with the mobile station, and a base station included in the second set is connected to the mobile station by a corresponding individual wireless link.

The second set may be a subset of the first set.

The first set may be updated at intervals of a first time period and the second set may be update at intervals of a second time period, wherein the second time period is shorter than the first time period.

A primary common control channel (PCCCH) may be used to transfer at least control information between the mobile station and each base station included in the first set. A secondary common control channel (SCCCH) may be used to transfer at least control information between the mobile station and the base-station control station.

The base-station control station may control each base station included in the first set by receiving information from a base station through the SCCCH; determining whether the base station is included in the first set, based on the information; when it is determined that the base station is included in the first set. setting up a control channel for exchanging control information with the base station through the SCCCH; determining whether an information channel is set up. based on control information on the control channel; and when it is determined that an information channel is set up. setting up the information channel to the base station.

A base station included in the first set may control a corresponding individual wireless link to the mobile station by transmitting a pilot signal to a mobile station located in a cell thereof; receiving a pilot response signal from the mobile station; determining whether the base station is changed from the first set to the second set, based on the pilot response signal; when it is determined that the base station is changed from the first set to the second set. activating the corresponding individual wireless link through the PCCCH; and when it is determined that the base station is changed from the second set to the first set, inactivating the corresponding individual wireless link through the PCCCH.

The mobile station may control setup of the second set by exchanging a control signal with the base-station control station through the SCCCH in one of the cascs where the mobile station is connected to a new base station and where the mobile station sets up and release a connection to a base station included in the first set; determining a base station as a member of the second set based on quality of a pilot signal received from the base station; and sending a control instruction to the selected base station through the PCCCH to set up an individual wireless link to the selected base station.

The mobile station may determine the base station as a member of the second set when a quality value of a pilot signal received from the base station is not smaller than a predetermined value.

The mobile station may determine the base station as a member of the second set by selecting a plurality of base stations from the first set, wherein each of the selected base stations provides the mobile station with a reception quality value of a pilot signal received from a selected base station. the reception quality value being not smaller than a predetermined level; and selecting a predetermined number of base stations from the selected base stations to determine each of the predetermined number of base stations as a member of the second set.

The mobile station may determine the base station as a member of the second set by finding a maximum reception quality value among reception quality values of pilot signals received from respective ones of the base stations; and determining the base station as a member of the second set when a reception quality value of a pilot signal received from the base station is not smaller than a value obtained by subtracting a predetermined value from the maximum reception quality value.

According to another aspect of the present invention, in a mobile communications system allowing diversity handover control of a mobile station among a plurality of base stations, which are controlled by a base-station control station provided within a switching network, a connection control method includes the steps of: setting a first set of base stations which are allowed to set up respective ones of individual wireless channels to the mobile station, wherein a base station included in the first set is connected to the base-station control station by a corresponding wired link to exchange information associated with the mobile station: providing a primary common control channel (PCCCH) used to transfer at least control information between the mobile station and each base station included in the first set; providing a secondary common control channel (SCCCH) used to transfer at least control information between the mobile station and the base-station control station, wherein the SCCCH is updated at intervals of a first time period and the PCCCH is update at intervals of a second time period, wherein the second time period is shorter than the first time period; and setting a second set of base stations which is a subset of the first set, wherein a base station included in the second set is connected to the mobile station through a corresponding individual wireless link that is set up by transferring a control instruction through the PCCCH.

The PCCCH may be terminated at the first set and the SCCCH may be terminated at the base-station control station.

The PCCCH may be a wireless channel and the SCCCH may be a combination of a wireless channel from the mobile station to the first set and a wired channel from the first set to the base-station control station.

As described above, in a mobile communications system according to the present invention. the first set of base stations and the second set of base stations are set and a base station included in the second set is connected to the mobile station by a corresponding individual wireless link. Further, two common control channels PCCCH and SCCCH are provided to transfer control information and the PCCCH has a relatively short control period. The setup control is performed only for a limited number of individual wireless links between the mobile station and the second set of base stations. Therefore, time required for control of the second set can be much shorter than time required for control of the first set, resulting in high-speed setup/release of base station included in the second set.

Since there is a high probability that the first set includes a base station having a minimum propagation loss, by performing high-speed setup/release of a base station included in the first set, it ensures with a high probability that the mobile station is connected to the base station having the minimum propagation loss and exchanges signals with a necessary number of base stations for effective site diversity.

The mobile station communicates with only the base stations of the second set by wireless channels. Therefore. compared with the prior art. the amount of hardware required in mobile and base stations can be reduced. In addition, an increase in interference can be suppressed in the case of downlink soft handover as the case of the above-described Furukawa's technique. According to the present invention. an increase in capacity can be expected.
Fig. 1 is a schematic diagram showing a configuration of a conventional mobile communications system;
Fig. 2 is a schematic diagram showing a configuration of a mobile communications system according to an embodiment of the present invention;
Fig. 3A is a time chart showing a period of control instruction on the primary common control channel (PCCCH) in the embodiment;
Fig. 3B is a time chart showing a period of control instruction on the secondary common control channel (SCCCH) in the embodiment:
Fig. 4A is a time chart showing an operation for secondary group (SM) base station setup/release on the primary common control channel (PCCCH) in the embodiment;
Fig. 4B is a time chart showing an operation for primary group (PM) base station setup/release on the secondary common control channel (SCCCH) in the embodiment:
Fig. 5 is a flow chart showing a connection control operation of the base station control station in the embodiment:
Fig. 6 is a flow chart showing a connection control operation of the base station in the embodiment;
Fig. 7 is a flow chart showing a first example of a connection control operation of the mobile station control station in the embodiment;
Fig. 8 is a flow chart showing a second example of a connection control operation of the mobile station control station in the embodiment: and
Fig. 9 is a flow chart showing a third example of a connection control operation of the mobile station control station in the embodiment.

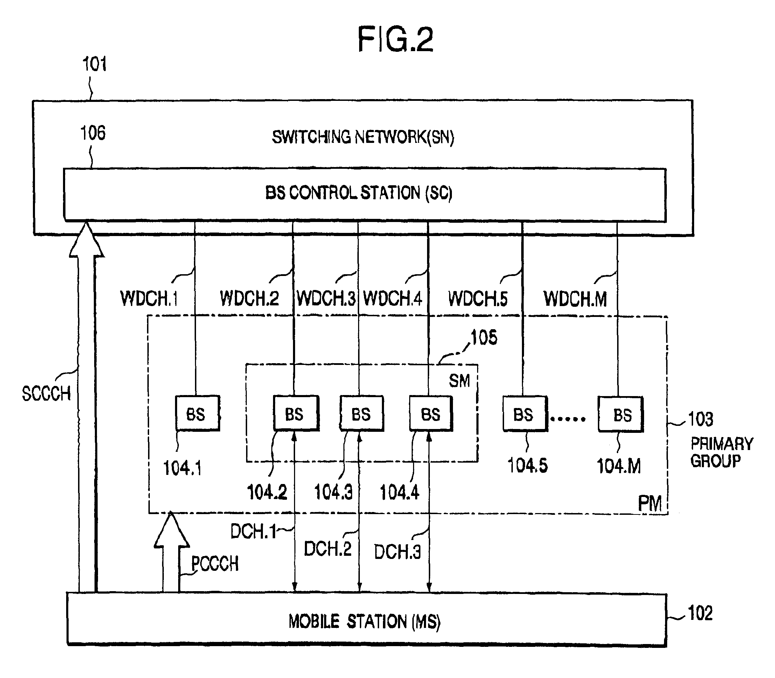

As shown in Fig. 2, it is assumed that a cellular mobile communications system is composed or a switching network 101. a mobile station (MS) 102. a plurality of base stations (BSs) 104, and a base-station control station (SC) 106 that is provided in the switching network 101 and is connected to the base stations 104 through respective ones of wired links WDCH. In the cellular system, each base station and each mobile station measure intensities of pilot signals and interference signals received from adjacent cells at regular intervals in order to use them for handover control and call admission control.

Here, a primary group (PM) 103 is defined as a set of M base stations 104.1 to 104.M which are connectable to the mobile station 102 through individual wireless links DCH.

A secondary group (SM) 105 is defined as a subset of the primary group 103, consisting of base stations which are actually connected to the mobile station 102 through individual wireless links. Base stations which are members of the secondary group (SM) 105 are selected among the M base stations 104.1 to 104.M, which will be described later. The mobile station 102 is connected to the secondary group members (base stations) through respective ones of individual wireless links. In Fig. 2. the secondary group (SM) 105 consists of base stations 104.2 to 104.4 which are actually connected to the mobile station 102 through the individual wireless links DCH.1 to DCH.3.

The present system is provided with two common control channels: PCCCH (Primary common control channel) that is directed from the mobile station 102 to the primary group 103: and SCCCH (Secondary common control channel) that is directed from the mobile station 102 to the BS control station 106. Here. the PCCCH is formed by wireless link. The SCCCH is formed by wireless link from the mobile station 2 to the primary group 103 and wired link from the primary group 103 to the BS control station 11. In other words, a SCCCH signal is received at base stations and each of the base stations sends it to the BS control station 106.

Setup/release of a connection to a base station of the primary group (PM) 103 is performed by control instructions transferred through the secondary common control channel SCCCH. On the other hand, sctup/release of an individual wireless link, that is, a connection to a base station of the secondary group (PM) 105 is performed by control instructions transferred through the primary common control channel PCCCH. Control instructions transferred on PCCCH and SCCCH are different in a period of control and a time length of each control instruction as described hereafter.

### OPERATION

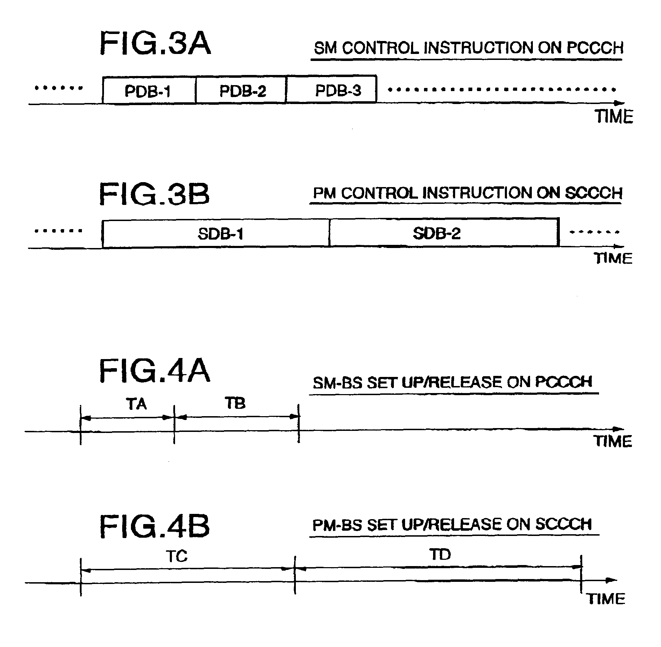

Referring to Figs. 3A and 3B, the time length of each SM control instruction PDB-1. PDB-2, ... on the PCCCH is set to be shorter than that of each PM control instruction SDB-1. SDB-2. ... on the SCCCH and further the cycle of control instruction transmission on the PCCCH is also set to be shorter than that of control instruction transmission on the SCCCH.

Referring to Figs. 4A and 4B, setup/release in the secondary group (SM) 105, that is, setup/release of an individual wireless link from the mobile station 102 to a base station of the secondary group (PM) 105. is performed by SM control instructions on the PCCCH, and setup/release in the primary group (PM) 103 is performed by control instructions on the SCCCH.

### Primary group (PM) control

As shown in Fig. 4B, when the setup/release of the primary group (PM) 103 starts, PM control instructions SDB for controlling the primary group (PM) 103 are transmitted from the mobile station 102 to the BS control station 106 through the SCCCH during a time period TC. As described later, a control instruction for controlling the primary group (PM) 103 includes information indicating the quality or intensity of a pilot signal received at the mobile station 102. Since each base station transmits a pilot signal including the BS identification thereof at regular intervals, each mobile station can measure the intensity or quality of the received pilot signal and use the measured quality or intensity for soft handover control.

After having received the PM control instructions SDB from the mobile station 102 through the SCCCH for the time period TC, the BS control station 106 performs setup/release of base stations in the switching network 101 for a time period TD to set up a primary group (PM) 103.

### Secondary group (SM) control

As shown in Fig. 4A. when the setup/release of the secondary group (SM) 105 starts, SM control instructions PDB for controlling the secondary group (SM) 105 are transmitted from the mobile station 102 to the base stations of the primary group (PM) through the PCCCH during a time period TA. A SM control instruction for controlling the secondary group (SM) 105 includes the identification numbers of base stations to belong to the secondary group (SM) 105. In Fig. 2, the base stations 104.2, 104.3 and 104.4 are set to belong to the secondary group (SM) 105. Which base station should be set to a member of the secondary group (SM) 105 is determined by the mobile station 102 itself comparing the quality or intensity of pilot signals received from the base stations, which will be described in detail later.

After having received the SM control instructions PDB from the mobile station 102 through the PCCCH for the time period TA, the base stations of the secondary group (SM) 105 (here, base stations 104.2, 104.3 and 104.4) performs setup/release of individual wireless links (here, DCH.1. DCH.2, and DCH.3) for a time period TB to set up a secondary group (SM) 105.

### Advantages

As described above, in order to set the secondary group (SM) 105, the PCCCH having a relatively short control period is used and further the setup control is performed only for a limited number of individual wireless links between the mobile station 102 and the base stations 104.2, 104.3 and 104.4 which each have been designated as members of the secondary group (SM) 105- Therefore, time required for control of the secondary group (SM) 105 oan be much shorter than time required for control of the primary group (PM) 103, resulting in high-speed setup/release of a base station included in the primary group (PM) 103.

In the case where the primary group (PM) 103 consists of a number of base stations 104.1 to 104.M, there is a high probability that the primary group (PM) 103 includes a base station having the minimum propagation loss. Therefore, by performing high-speed setup/release of a base station included in the primary group (PM) 103, it ensures with a high probability that the mobile station 102 is connected to the base station having the minimum propagation loss and exchanges signals with a necessary number of base stations for effective site diversity.

The mobile station 102 communicates with only the base stations of the secondary group (SM) 105 by radio. Therefore, compared with the prior art such that the mobile station communicates with all the base stations 104.1 to 104. M of the primary group, the amount of hardware required in mobile and base stations can be reduced.

In addition, an increase in interference can be suppressed in the case of downlink soft handover as the case of the above-described Furukawa's technique. According to the present invention, an increase in capacity can be expected.

### BS CONTROL STATION

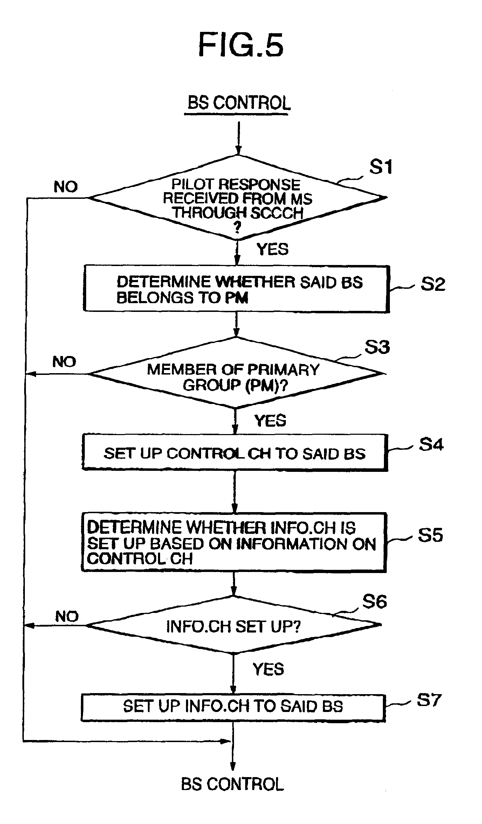

The BS control station 106 is provided with a program-controlled processor (not shown), which runs control programs to perform the following procedure as shown in Fig. 5. These control programs are previously stored in a read-only memory (ROM) or other non-volatile memory (not shown).

Referring to Fig. 5, the BS control station 106 performs control of all the base stations including the base stations 104.1 to 104.M and, when receiving pilot response information from the mobile station 102 through a base station (YES at step S1), it is determined whether the said base station belongs to the primary group (PM) 103 based on the pilot response information (step S2).

When the BS control station 106 determines that the said base station is a member of the primary group (PM) 103 (YES at step S3), the BS control station 106 sets up a control channel to the said base station to exchange control signals through the SCCCH (step S4). Thereafter. the BS control station 106 determines based on information on the control channel whether an information channel is to be set up for exchanging voice signals or data (step S5).

When it is determined that an information channel is set up (YES at step S6), the BS control station 106 sets up an information channel to the said base station through the SCCCH (step S7) and then control goes back to the BS control.

### BASE STATION OF PRIMARY GROUP

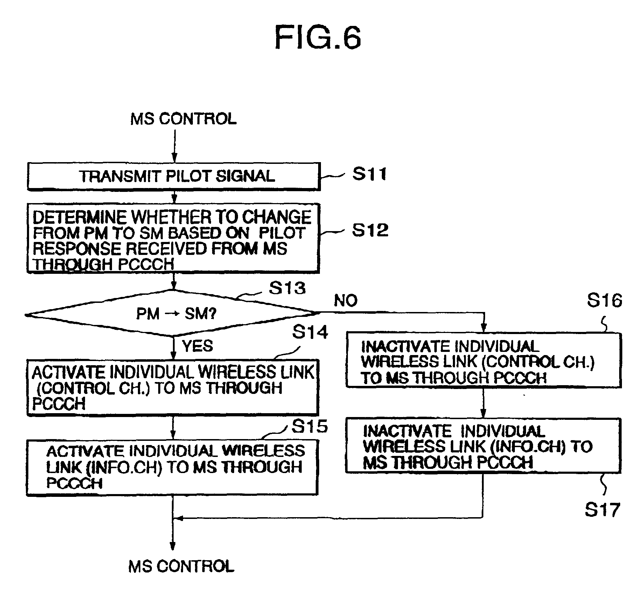

Each of the base stations is provided with a program-controlled processor (not shown), which runs control programs to perform the following procedure as shown in Fig. 6. These control programs are previously stored in a read-only memory (ROM) or other non-volatile memory (not shown).

Referring to Fig. 6, each of the base stations 104.1 to 104.M forming the primary group (PM) 103 performs control of mobile stations located in the cell thereof, for example, transmission of a pilot signal to the mobile stations located therein (step S11).

When receiving a pilot response signal from a mobile station through the PCCCH, each of the base stations 104.1 to 104.M determines based on the contents of the received pilot response signal whether the base station itself is to be changed from the primary group (PM) 103 to the secondary group (SM) 105 (step S12).

When it is determined that the base station itself becomes a member of the secondary group (SM) 105 (YES at step S13). the base station activates a corresponding individual wireless link (control channel) to the mobile station using the PCCCH (step S14) and activates the individual wireless link (information channel) to the mobile station using the PCCCH (step S15). Thereafter, control goes back to the control of the mobile stations.

When it is determined that the base station itself is not a member of the secondary group (SM) 105, that is, changes from the secondary group (SM) 105 to the primary group (PM) 103 (NO at step S13), the base station inactivates the individual wireless link (control channel) to the mobile station using the PCCCH (step S16) and inactivates the individual wireless link (information channel) to the mobile station using the PCCCH (step S17). Thereafter, control goes back to the control of the mobile stations.

In this manner, a new base station establishes an individual wireless link to the mobile station 102 to enter the secondary group (SM) 105 and releases an old individual wireless link from the secondary group (SM) 105. In Fig. 2, the base stations 104.2. 104.3 and 104.4 establish the individual wireless links DCH.1. DCH.2, and DCH,3 to the mobile station 102, respectively.

### SECONDARY GROUP MEMBER SELECTION

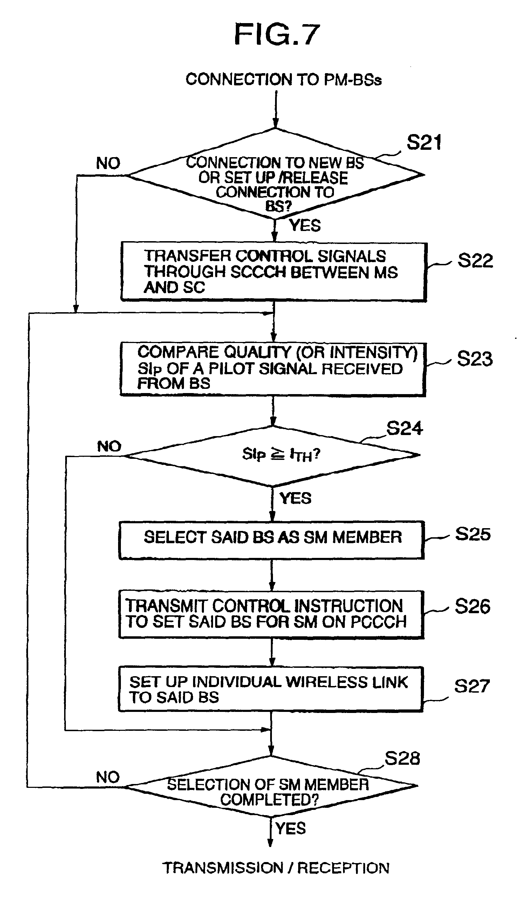

The mobile station 102 is provided with a program-controlled processor (not shown), which runs control programs to perform the following procedure as shown in Figs. 7-9. These control programs are previously stored in a read-only memory (ROM) or other non-volatile memory (not shown).

### Example I

Referring to Fig. 7, the mobile station 102 performs connection control to the base stations 104.1 to 104.M included in the primary group (PM) 103 and determines whether a connection to a new base station or setup/release of a connection to a base station should be made (step S21). If it is determined that a connection to a new base station or setup/release of a connection to a base station is to be made (YES at step S21), the mobile station 102 performs transfer of control signals to the BS control station 106 (step S22).

When it is determined that a connection to a new base station or setup/release of a connection to a base station is not to be made (NO at step S21) or after the step S22 has been completed, the mobile station 102 compares quality or intensity SIᵣ of a pilot signal received from a base station with a predetermined threshold I_{TH} (step S23). If the quality or intensity SIₚ is equal to or greater than the predetermined threshold I_{TM} (YES at step S24). then the mobile station 102 selects the said base station transmitting the corresponding pilot signal with good propagation condition as a member of the secondary group (SM) 105 (step S25).

Then, the mobile station 102 transmits an SM control instruction for changing the said base station to the secondary group (SM) 105 through the PCCCH (step S26) and thereafter sets up the individual wireless link to the said base station through the PCCCH (step S27). If the quality or intensity SI_{P} is smaller than the predetermined threshold I_{TH} (NO at step S24), then the steps S25-S27 are not performed. The steps S23-S27 are repeatedly performed until the selection of the secondary group member has been completed (step S28).

### Example II

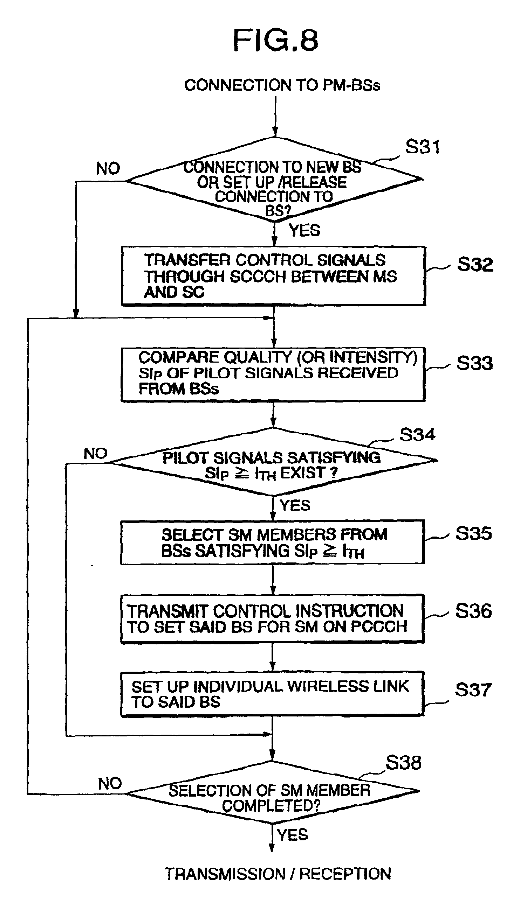

Referring to Fig. 8. the mobile station 102 performs connection control to the base stations 104.1 to 104.M included in the primary group (PM) 103 and determines whether a connection to a new base station or setup/release of a connection to a base station should be made (step S31). If it is determined that a connection to a new base station or setup/release of a connection to a base station is to be made (YES at step S31), the mobile station 102 performs transfer of control signals to the BS control station 106 (step S32).

When it is determined that a connection to a new base station or setup/release of a connection to a base station is not to be made (NO at step S31) or after the step S32 has been completed, the mobile station 102 compares quality or intensity SI_{P} of pilot signals received from base stations with a predetermined threshold I_{TH} (step S33). If there is at least one base station transmitting a pilot signal satisfying the condition that the quality or intensity SI_{P} is equal to or greater than the predetermined threshold I_{TH} (YES at step S34). then the mobile station 102 selects a predetermined number of members of the secondary group (SM) 105 from the said base stations transmitting the corresponding pilot signal with good propagation condition (step S35).

Then. the mobile station 102 transmits SM control instructions for changing the selected base stations to the secondary group (SM) 105 through the PCCCH (step S36) and thereafter sets up the individual wireless links to the selected base stations through the PCCCH (step S37). If there is no base station transmitting a pilot signal satisfying the condition that the quality or intensity SI_{P} is equal to or greater than the predetermined threshold I_{TH} (NO at step S34), then the steps S35-S37 are not performed. The steps S33-S37 are repeatedly performed until the selection of the secondary group member has been completed (step S38).

### Example III

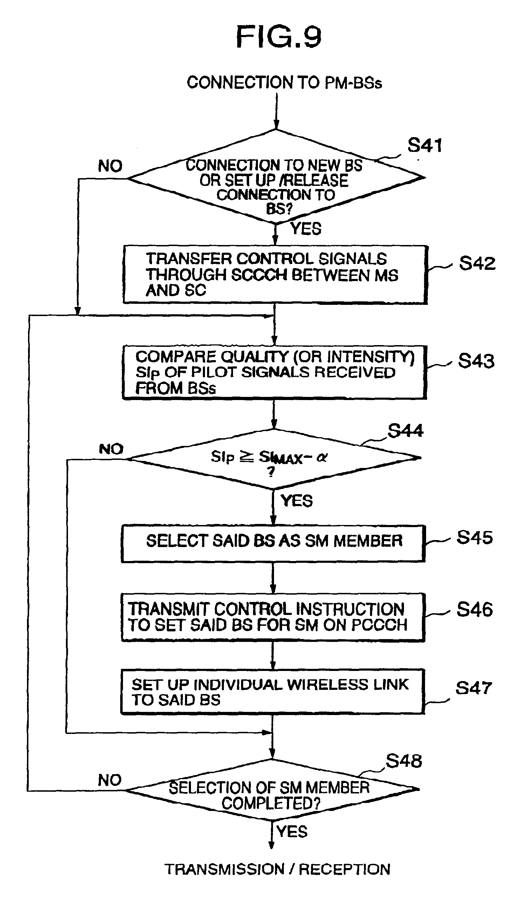

Referring to Fig. 9, the mobile station 102 performs connection control to the base stations 104.1 to 104.M included In the primary group (PM) 103 and determines whether a connection to a new base station or setup/release of a connection to a base station should be made (step S41). If it is determined that a connection to a new base station or setup/release of a connection to a base station is to be made (YES at step S41), the mobile station 102 performs transfer of control signals to the BS control station 106 (step S42).

When it is determined that a connection to a new base station or setup/release of a connection to a base station is not to be made (NO at step S41) or after the step S42 has been completed, the mobile station 102 compares quality or intensity SI_{P} of pilot signals received from the base stations to find the maximum quality or intensity SI_{MAX} among them (step S43).

Thereafter, it is determined whether the quality or intensity SIᵣ of each pilot signal is equal to or greater than a value obtained by subtracting a predetermined value α from the maximum quality or intensity SI_{MAX} (step S44). If SIᵣ ≧ SI_{MAX} - α (YES at step 44), then the mobile station 102 selects the said base station transmitting the corresponding pilot signal with good propagation condition as a member of the secondary group (SM) 105 (step S45).

Then, the mobile station 102 transmits an SM control instruction for changing the said base station to the secondary group (SM) 105 through the PCCCH (step S46) and thereafter sets up the individual wireless link to the said base station through the PCCCH (step S47). If SI_{P} < SI_{MAX} - α (NO at step 44). then the steps S45-S47 are not performed. The steps S43-S47 are repeatedly performed until the selection of the secondary group member has been completed (step S48).

The secondary group member selection method is not limited to the above-described examples. Other arbitrary selection methods may be employed.

## Claims

1. A mobile communications system allowing diversity handover control of a mobile station (102) among a plurality of base stations (104.1-104.M) which are controlled by a base-station control station (106), characterized by:
a first set (103) of base stations which are allowed to set up respective ones of individual wireless channels to the mobile station; and
a second set (105) of base stations including a subset of the first sct,
wherein a base station included in the first set is connected to the base-station control station by a corresponding wired link to exchange information associated With the mobile station. and a base station included in the second set is connected to the mobile station by a corresponding individual wireless link.

2. The mobile communications system according to claim 1, wherein the second set is a subset of the first set.

3. The mobile communications system according to claim 1 or 2, wherein the first set is updated at intervals of a first time period and the second set is update at intervals of a second time period, wherein the second time period is shorter than the first time period.

4. The mobile communications system according to any one of claims 1-3, wherein
a primary common control channel (PCCCH) is used to transfer at least control information between the mobile station and each base station included in the first set; and
a secondary common control channel (SCCCH) is used to transfer at least control information between the mobile station and the base-station control station.

5. The mobile communications system according to claim 4, wherein the base-station control station controls each base station included in the first set by
receiving information from a base station through the SCCCH;
determining whether the base station is included in the first set, based on the information;
when it is determined that the base station is included in the first set, setting up a control channel for exchanging control information with the base station through the SCCCH;
determining whether an information channel is set up, based on control information on the control channel; and
when it is determined that an information channel is set up. setting up the information channel to the base station.

6. The mobile communications system according to claim 4 or 5, wherein a base station included in the first set controls a corresponding individual wireless link to the mobile station by
transmitting a pilot signal to a mobile station located in a cell thereof:
receiving a pilot response signal from the mobile station;
determining whether the base station is changed from the first set to the second set, based on the pilot response signal;
when it is determined that the base station is changed from the first set to the second set, activating the corresponding individual wireless link through the PCCCH; and
when it is determined that the base station is changed from the second set to the first set, inactivating the corresponding individual wireless link through the PCCCH.

7. The mobile communications system according to any one of claims 4-6, wherein the mobile station controls setup of the second set by
exchanging a control signal with the base-station control station through the SCCCH in one of the cases where the mobile station is connected to a new base station and where the mobile station sets up and release a connection to a base station included in the first set;
determining a base station as a member of the second set based on quality of a pilot signal received from the base station; and
sending a control instruction to the selected base station through the PCCCH to set up an individual wireless link to the selected base station.

8. The mobile communications system according to claim 7, wherein the mobile station determines the base station as a member of the second set when a quality value of a pilot signal received from the base station is not smaller than a predetermined value.

9. The mobile communications system according to claim 7, wherein the mobile station determines the base station as a member of the second set by
selecting a plurality of base stations from the first set, wherein each of the selected base stations provides the mobile station with a reception quality value of a pilot signal received from a selected base station. the reception quality value being not smaller than a predetermined level; and
selecting a predetermined number of base stations from the selected base stations to determine each of the predetermined number of base stations as a member of the second set.

10. The mobile communications system according to claim 7, wherein the mobile station determines the base station as a member of the second set by
finding a maximum reception quality value among reception quality values of pilot signals received from respective ones of the base stations; and
determining the base station as a member of the second set when a reception quality value of a pilot signal received from the base station is not smaller than a value obtained by subtracting a predetermined value from the maximum reception quality value.

11. A connection control method for use in a mobile communications system allowing diversity handover control of a mobile station among a plurality of base stations, which are controlled by a base-station control station provided within a switching network, the connection control method comprising the steps of:
setting a first set of base stations which are allowed to set up respective ones of individual wireless channels to the mobile station, wherein a base station included in the first set is connected to the base-station control station by a corresponding wired link to exchange information associated with the mobile station;
characterized by:
providing a primary common control channel (PCCCH) used to transfer at least control information between the mobile station and each base station included in the first set:
providing a secondary common control channel (SCCCH) used to transfer at least control information between the mobile station and the base-station control station, wherein the SCCCH is updated at intervals of a first time period and the PCCCH is update at intervals of a second time period, wherein the second time period is shorter than the first time period; and
setting a second set of base stations, which is a subset of the first set, wherein a base station included in the second set is connected to the mobile station through a corresponding individual wireless link that is set up by transferring a control instruction through the PCCCH.

12. The connection control method according to claim 11. wherein the PCCCH is terminated at the first set and the SCCCH is terminated at the base-station control station.

13. The connection control method according to claim 11 or 12, wherein the PCCCH is a wireless channel and the SCCCH is a combination of a wireless channel from the mobile station to the first set and a wired channel from the first set to the base-station control station.

14. The connection control method according to any one of claims 11-13, wherein information associated with setup of the second set is not transferred on a wired link between the base-station control station and each of base stations included in the first set but in the second set.

15. The connection control method according to any one of claims 11-14. further comprising the steps of:
at the base-station control station,
receiving information from a base station through the SCCCH;
determining whether the base station is included in the first set, based on the information;
when it is determined that the base station is included in the first set, setting up a control channel for exchanging control information with the base station through the SCCCH;
determining whether an information channel is set up, based on control information on the control channel; and
when it is determined that an information channel is set up, setting up the information channel to the base station.

16. The connection control method according to any one of claims 11-15. further comprising the steps of.
at a base station included in the first set.
transmitting a pilot signal to a mobile station located in a cell thereof;
receiving a pilot response signal from the mobile station;
determining whether the base station is changed from the first set to the second set, based on the pilot response signal;
when it is determined that the base station is changed from the first set to the second set, activating the corresponding individual wireless link through the PCCCH: and
when it is determined that the base station is changed from the second set to the first set, inactivating the corresponding individual wireless link through the PCCCH.

17. The connection control method according to any one of claims 11-16. further comprising the steps of:
at the mobile station,
a) exchanging a control signal with the base-station control station through the SCCCH in one of the cases where the mobile station is connected to a new base station and where the mobile station sets up and release a connection to a base station included in the first set;
b) determining a base station as a member of the second set based on quality of a pilot signal received from the base station; and
c) sending a control instruction to the selected base station through the PCCCH to set up an individual wireless link to the selected base station.

18. The connection control method according to claim 17, wherein the step (b) comprises the step of:
determining the base station as a member of the second set when a quality value of a pilot signal received from the base station is not smaller than a predetermined value.

19. The connection control method according to claim 17, wherein the step (b) comprises the step of:
selecting a plurality of base stations from the first set, wherein each of the selected base stations provides the mobile station with a reception quality value of a pilot signal received from a selected base station, the reception quality value being not smaller than a predetermined level; and
selecting a predetermined number of base stations from the selected base stations to determine each of the predetermined number of base stations as a member of the second set.

20. The connection control method according to claim 17, wherein the step (b) comprises the step of:
finding a maximum reception quality value among reception quality values of pilot signals received from respective ones of the base stations; and
determining the base station as a member of the second set when a reception quality value of a pilot signal received from the base station is not smaller than a value obtained by subtracting a predetermined value from the maximum reception quality value.
